# EUROPÄISCHE PATENTSCHRIFT

(11) **EP 2 083 208 B1**
(45) Veröffentlichungstag und Bekanntmachung des Hinweises auf die Patenterteilung: **15.06.2011**
(21) Anmeldenummer: 09000907.7
(22) Anmeldetag: 23.01.2009
(51) Int. Cl.: F16M 13/02

(54) **Vorrichtung, die sich zum Befestigen eines Objekts an einer Wand eignet, sowie ein Wandelement und ein Stützelement, die sich für eine solche Vorrichtung eignen**
Device, for securing an object to a wall, as well as a wall element and a support element that are suitable for such a device
Appareil, destiné à fixer un objet à un mur, ainsi qu'un élément mural et un élément de soutien qui sont adaptés à un tel appareil

(30) Priorität: 28.01.2008 NL 1034966
(43) Veröffentlichungstag der Anmeldung: 29.07.2009
(73) Patentinhaber: Vogel's Holding B.V., 5628 DB Eindhoven (NL)
(72) Erfinder: Luijben, Stefan Arthur, 5707 RZ Helmond (NL); Grolle, Paul Robbert, 5708 AB Helmond (NL)
(74) Vertreter: Dorna, Peter

(56) Entgegenhaltungen:
- EP-A- 1 559 947
- DE-U1- 20 107 212
- DE-U1-202005 019 637
- DE-U1-202006 011 519
- US-A- 2 935 286
- US-A1- 2007 235 614

## Beschreibung

Die Erfindung bezieht sich auf eine Vorrichtung, gemäß dem Obergriff des Anspruchs 1.

Die Erfindung bezieht sich ferner auf ein Wandelement und ein Stützelement, jedes mit einer Vorrichtung gemäß der Erfindung.

Bei einer aus DE-U1-20.2006.011.519 bekannten Vorrichtung handelt es sich beim Stützelement um eine Gitarrenstütze, mit der ein Objekt, wie eine Gitarre, entfernbar befestigt werden kann. Wenn man die Gitarrenstütze vom Wandelement lösen möchte, muss man das zweite hakenförmige Element gegen den Widerstand in eine vom ersten hakenförmigen Element abgewandte Richtung verschieben. Der Nutzer kann dies mit einer Hand tun. Beim Entfernen der Gitarrenstütze von der Wand ist die Gitarre nicht mehr mit der Gitarrenstütze verbunden, so dass keine Gefahr besteht, dass die Gitarre beschädigt wird.

Wenn aber das am Stützelement befestigte Element beim Entfernen des Stützelements mit dem Stützelement verbunden bleibt, wobei das Objekt relativ hart oder relativ schwer ist, kann ein Nutzer bei der bekannten Vorrichtung nur eine Hand gebrauchen, um das Objekt und das Stützelement festzuhalten, weil mit der anderen Hand das zweite hakenförmige Element gelöst werden muss. Dies wird weiter erschwert, wenn unterschiedliche zweite hakenförmige Elemente verwendet werden. Zu einer solchen Situation kommt es beispielsweise, wenn die Vorrichtung zum Aufhängen eines Bildschirms an einer Wand verwendet wird.

Bei einer aus der US-Patentschrift US-B2-7.063.295 bekannten Vorrichtung ist das Wandelement mit einer an der Wand zu befestigenden Platte versehen, an der zwei U-förmige Profile um eine Schwenkachse schwenkbar befestigt sind. Jedes U-förmige Profil ist an einer von der Schwenkachse abgewandten Seite mit einem Rand versehen, der als erstes Auffangelement für ein am Bildschirm zu befestigendes Stützelement fungiert. Jedes U-förmige Profil ist an der Unterseite mit einem mit einer Aussparung versehenen Schlitten versehen, der gegen Widerstand in eine vom ersten Auffangelement abgewandte Richtung verschoben werden kann. Das U-förmige Profil ist im Bereich des Schlittens mit einer gegenüber der am Schlitten vorhandenen Aussparung gelegenen Öffnung versehen.

Die an sich bekannte Vorrichtung ist ferner mit zwei Stützelementen versehen, die jeweils im Bereich einer Oberseite mit einem ersten hakenförmigen Element und im Bereich der Unterseite mit einem zweiten hakenförmigen Element versehen sind. Nach Befestigung der Stützelemente an dem Bildschirm werden die ersten hakenförmigen Elemente in Eingriff mit den Rändern an der Oberseite der U-förmigen Profile gebracht, wonach die zweiten hakenförmigen Elemente durch die in den U-förmigen Profilen vorhandenen Öffnungen in die in den Schlitten vorhandenen Aussparungen gedrückt werden. Hierdurch werden die Schlitten gegen den Widerstand zuerst nach unten gedrückt und, nachdem die hakenförmigen Elemente ausreichend weit durch die Aussparungen verschoben worden sind, werden die Schlitten gegen den Widerstand in eine zu den ersten Auffangelementen gewandte Richtung verschoben. Hierdurch werden die zweiten hakenförmigen Elemente der Stützelemente mit den U-förmigen Profilen des Wandelements verriegelt.

Ein Nachteil der aus US-B2-7.063.295 bekannten Vorrichtung ist, dass die zweiten hakenförmigen Elemente genau auf die Aussparungen im Schlitten gebracht werden müssen, damit die zweiten hakenförmigen Elemente mit den Schlitten in Eingriff gebracht werden können. Hierzu müssen daher auch die ersten hakenförmigen Elemente genau auf die ersten Auffangelemente ausgerichtet werden. Außerdem ist die Vorrichtung durch das Vorhandensein eines Schlittens und eines zweiten hakenförmigen Elements relativ kompliziert.

Ein anderes Beispiel einer Vorrichtung ist aus US 2007/235614 bekannt.

Die Erfindung zielt darauf ab, eine Vorrichtung zum einfachen Befestigen eines Objekts an einer Wand bereitzustellen.

Dieses Ziel wird durch die erfindungsgemäße Vorrichtung dadurch erreicht, dass die Vorrichtung mit einem Blockierungsmittel zum Blockieren des zweiten hakenförmigen Elements in einer Blockierposition in einer vom Wandelement gelösten Position versehen ist, und dass das zweite hakenförmige Element einen Schlitten umfasst, der bezüglich des Stützelements verschiebbar und schwenkbar gelagert ist, welcher Schlitten aus einer ersten, vom Wandelement gelösten Position, in eine zweite, mit dem zweiten Auffangelement verbundene Position, und umgekehrt, verschoben werden kann, wobei der Schlitten in der ersten Position gegen Widerstand von dem ersten hakenförmigen Element beabstandet gelegen ist und zum Wandelement geschwenkt ist, während der Schlitten wegen das Schwenken der Unterseite des Bildschirms und daher des Stützelements in eine auf die Wand zu geschwenkte richtung in der zweiten Position vom Wandelement weggeschwenkt und zum ersten hakenförmigen Element hingeschoben ist.

Ein solches hakenförmiges Element ist relativ einfach im Aufbau.

Beim Lösen des Stützelements vom Wandelement wird das zweite hakenförmige Element gegen den Widerstand in eine vom ersten hakenförmigen Element abgewandte Richtung verschoben, wodurch der Eingriff mit dem zweiten Auffangelement aufgehoben wird. Indem nun das zweite hakenförmige Element in die Blockierposition positioniert wird, wird auf einfache Weise verhindert, dass beim Ergreifen des Objekts, beispielsweise des Bildschirms, vor dem Lösen des ersten Auffangelements vom ersten hakenförmigen Element das zweite hakenförmige Element unbeabsichtigt wieder in Eingriff mit dem zweiten Auffangelement kommt.

Beim Befestigen des Stützelements am Wandelement, wobei die Vorrichtung, falls gewünscht, mit einer Vielzahl von Stützelementen versehen sein kann, wird das erste hakenförmige Element in Eingriff mit dem im Wandelement vorgesehenen ersten Auffangelement gebracht. Dieses Auffangelement kann erheblich breiter sein als das erste hakenförmige Element, wodurch das erste hakenförmige Element einfach mit dem ersten Auffangelement verbunden werden kann. Hierdurch muss das Stützelement nicht genau bezüglich des Wandelements positioniert werden. Danach wird das zweite hakenförmige Element gegen den Widerstand in eine vom ersten hakenförmigen Element abgewandte Richtung verschoben, wodurch es mit dem zweiten Auffangelement in Eingriff gebracht werden kann. Danach wird das zweite hakenförmige Element gegen Widerstand in eine zum ersten hakenförmigen Element weisende Richtung verschoben, wodurch ein Eingriff mit dem zweiten Auffangelement bewirkt wird. Auch das zweite Auffangelement kann eine relativ große Breite haben, wodurch ein Ausrichten des zweiten hakenförmigen Elements auf das zweite Auffangelement nicht nötig ist. Dadurch, dass das zweite hakenförmige Element gegen Widerstand zum ersten hakenförmigen Element verschoben werden kann, ist ein gesonderter, im Wandelement gelegener verschiebbarer Schlitten, wie bei der aus US-B2-7.063.295 bekannten Vorrichtung, nicht nötig. Hierdurch ist der Aufbau der erfindungsgemäßen Vorrichtung relativ einfach.

Eine Ausführungsform der erfindungsgemäßen Vorrichtung ist dadurch gekennzeichnet, dass das zweite hakenförmige Element zum Verschieben des zweiten hakenförmigen Elements in einer vom ersten hakenförmigen Element abgewandte Richtung gegen Widerstand mit einem Zugelement versehen ist.

Mit Hilfe des Zugelements ist es möglich, das zweite hakenförmige Element gegen den Widerstand zu verschieben und in Eingriff mit dem zweiten Auffangelement zu bringen. Danach kann das erste hakenförmige Element vom ersten Auffangelement abgenommen werden. Hierdurch kann das Stützelement auf einfache Weise gelöst werden.

Noch eine andere Ausführungsform der erfindungsgemäßen Vorrichtung ist dadurch gekennzeichnet, dass das erste und/oder zweite Auffangelement einen langgestreckten Rand umfasst, womit das hakenförmige Element in Betrieb in Eingriff ist, wobei die Länge des langgestreckten Rands mindestens doppelt so groß wie die Breite des hakenförmigen Elements ist.

Durch den langgestreckten Rand kann das Objekt, bei dem es sich beispielsweise um einen Bildschirm handeln kann, nach dem Anbringen des Wandelements an die Wand in eine gewünschte Position bezüglich des Wandelements gebracht werden. Hierbei kann das Befestigen des Wandelements an der Wand relativ ungenau erfolgen, wobei erst durch das Platzieren des Objekts mit dem Stützelement an dem Wandelement die vom Nutzer gewünschte Position erzielt wird. Falls gewünscht, kann diese Position vom Nutzer innerhalb der Länge des langgestreckten Rands später geändert werden.

Eine andere Ausführungsform der erfindungsgemäßen Vorrichtung ist dadurch gekennzeichnet, dass der Schlitten mit einer Schwenkachse versehen ist, die in einem sich zum ersten hakenförmigen Element erstreckenden Schlitten im Stützelement verschiebbar gelagert ist, welcher Schlitten ferner mit einer L-förmigen Rille versehen ist, in der eine mit dem Stützelement verbundene Gleitachse gelegen ist, welcher Schlitten um die Schwenkachse aus der ersten Position, in die Gleitachse im Bereich eines ersten Endes der L-förmigen Rille gelegen ist, in eine zweite Position, in der die Gleitachse im Bereich eines zweiten Endes der L-förmigen Rille gelegen ist, und umgekehrt, schwenkbar ist.

Durch die Rillen und die darin gelegenen Schwenkachse und Gleitachse wird eine sehr definierte Verschiebung des Schlittens bezüglich des Stützelements realisiert und sichergestellt.

Eine weitere Ausführungsform der erfindungsgemäßen Vorrichtung wird dadurch gekennzeichnet, dass die Gleitachse näher beim ersten hakenförmigen Element gelegen ist als die Schwenkachse, wobei sich zwischen der Schwenkachse und der Gleitachse eine Zugfeder erstreckt.

Durch die zwischen der Gleitachse und der Schwenkachse gelegene Zugfeder wird eine sich zum ersten hakenförmigen Element erstreckende Zugkraft auf den Schlitten ausgeübt.

Eine weitere Ausführungsform der erfindungsgemäßen Vorrichtung ist dadurch gekennzeichnet, dass das zweite Auffangelement einen langgestreckten Streifen umfasst, der im Wandelement verschiebbar gelagert ist, welcher Streifen zwischen einer Auffangposition, in der das zweite hakenförmige Element in Eingriff mit dem Streifen zu bringen ist, in eine Freigabeposition, in der das zweite Auffangelement außer Eingriff mit dem Streifen zu bringen ist, verschoben werden kann.

Durch einen solchen Streifen ist es möglich, die Verbindung zwischen zweiten hakenförmigen Elementen einer Vielzahl Stützelemente mit dem Wandelement aufzuheben. Hierbei müssen die zweiten Auffangelemente zum Lösen der zweiten hakenförmigen Elemente aus den zweiten Auffangelementen dann nicht gegen Widerstand verschoben werden.

Die Erfindung wird im Folgenden anhand der Zeichnungen näher erläutert, in denen
Fig. 1 eine Perspektivansicht ist, die eine erste Ausführungsform der erfindungsgemäßen Vorrichtung zeigt;
Fig. 2A, 2B Perspektivansichten sind, die ein zweites hakenförmiges Element der in Fig. 1 gezeigten Vorrichtung in einer gelösten Position zeigen;
Fig. 3A und 3B Perspektivansichten sind, die ein zweites hakenförmiges Element der in Fig. 1 gezeigten Vorrichtung in einer verbundenen Position zeigen;

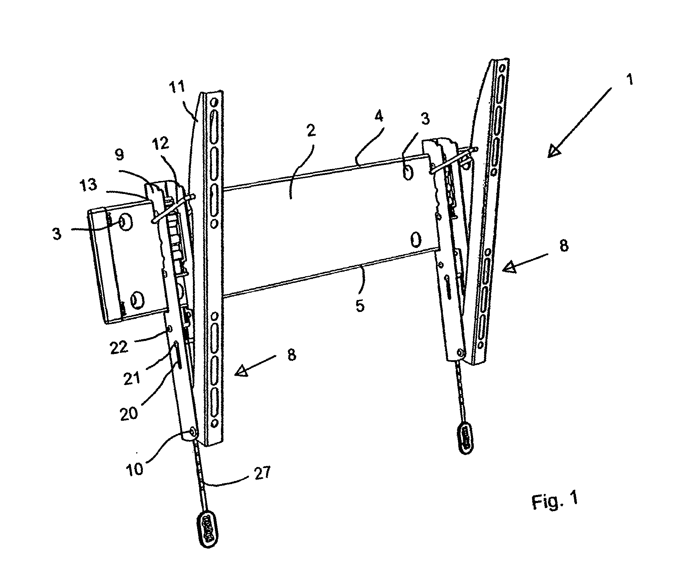

Fig. 1-3B zeigen Ansichten einer ersten Ausführungsform der erfindungsgemäßen Vorrichtung 1, welche Vorrichtung 1 mit einem langgestreckten Wandelement 2 versehen ist, das über Befestigungslöcher 3 an einer Wand zu befestigen ist. Das Wandelement 2 ist mit zwei sich parallel zueinander und horizontal erstreckenden Rändern 4, 5 versehen. Der Rand 4 ist, wie in Fig. 4A deutlich zu sehen, mit einer Fläche 6 versehen, die zur Wand gewandt ist und einen spitzen Winkel mit der Wand bildet. Auf dieselbe Weise umfasst der Rand 5, wie in Fig. 4A deutlicher zu sehen, eine Fläche 7, die zur Wand gewandt ist und einen spitzen Winkel mit der Wand bildet. Durch die Form der Ränder 4, 5 ist der Abstand der an der Wand gelegenen Seiten der Ränder kleiner als der zwischen den von der Wand abgewandten Seiten der Ränder. Die Ränder 4, 5 bilden jeweils erste und zweite Auffangelemente.

Die Vorrichtung 1 ist ferner mit zwei Stützelementen 8 versehen, die jeweils mit einer mit dem Wandelement 2 gekoppelten Stütze 9 und einem um eine Schwenkachse 10 schwenkbaren, mit der Stütze 10 verbundenen Profil 11 versehen sind. Die Stützen 9 und das Profil 11 sind beabstandet von der Schwenkachse 10 mittels eines Verbindungsarms 12 miteinander verbunden, wobei mit Hilfe des Verbindungsarms 12 der Winkel zwischen dem Profil 11 und der Stütze 9 eingestellt werden kann.

Die Stütze 9 ist im Bereich der Oberseite mit einem ersten hakenförmigen Element 13 versehen, das sich, wie in Fig. 4A deutlicher zu sehen ist, mit dem Rand 4 in Eingriff befindet, wobei das hakenförmige Element 13 an der Fläche 6 anliegt.

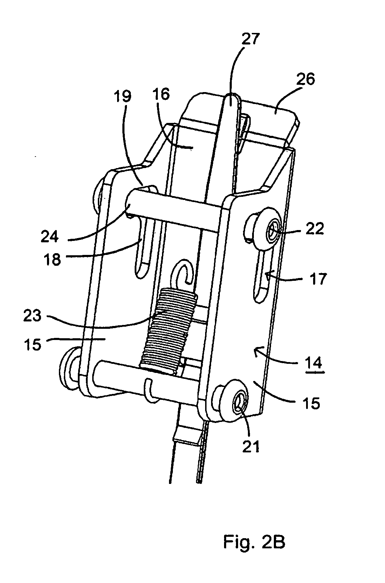

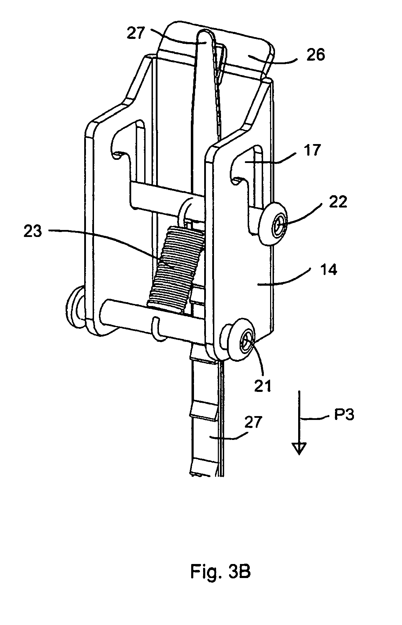

Die Stütze 9 ist an einer vom ersten hakenförmigen Element 13 abgewandten Seite mit einem Schlitten versehen (siehe Fig. 2B, 3B). Der Schlitten 14 umfasst zwei sich parallel zueinander erstreckende Wandelemente 15 und ein sich dazwischen erstreckendes Wandelement 16. Die beiden Wandelemente 15 sind mit L-förmigen Rillen 17 versehen, die eine sich in Längsrichtung des Schlittens 14 erstreckende erste Aussparung 18 und eine sich quer dazu erstreckende zweite Aussparung 19 umfassen. Die Stütze 9 ist mit einem sich vertikal zum ersten hakenförmigen Element 13 erstreckenden Schlitten 20 versehen, in dem eine sich zwischen den Wandelementen 15 des Schlittens 14 erstreckende Schwenkachse 21 verschiebbar liegt. Die Stütze 9 ist ferner mit einer Gleitachse 22 versehen, die näher am ersten hakenförmigen Element 13 der Stütze 9 liegt als die Schwenkachse 21. Die Gleitachse 22 erstreckt sich durch die Rillen 17 des Schlittens 14. Zwischen der Gleitachse 22 und der Schwenkachse 21 erstreckt sich eine Zugfeder 23. In Fig. 2B ist die Zugfeder 23 in einer von der Gleitachse 22 gelösten Position zu sehen. Im Gebrauch ist die Zugfeder 23 jedoch mit der Gleitachse 22 verbunden, wie auch in Fig. 3B zeigt. Zum Befestigen des Objekts, wie beispielsweise eines Bildschirms an einer Wand, wird mindestens ein Stützelement 8 und bei der hier gezeigten Ausführungsform zwei Stützelemente 8 an einem Bildschirm befestigt. Hierzu sind die Profile 11 mit Aussparungen versehen, durch die beispielsweise Schrauben geschoben werden können. Jede Bildschirmart, wie beispielsweise ein LCD- oder Plasmabildschirm, hat an der Rückseite vorgegebene Befestigungslöcher, die bei jedem Bildschirm anders angeordnet sein können. Da das Profil selbst mit einer Reihe von Löchern versehen ist, kann an jedem Bildschirm ein Profil 11 befestigt werden. Der Abstand zwischen zwei benachbarten Profilen 11 kann jedoch je nach Bildschirm variieren. Dies verursacht bei der erfindungsgemäßen Vorrichtung jedoch keinerlei Probleme. Bei der oben beschriebenen und aus dem US-Patent bekannten Einrichtung müssen die Profile in einem durch das Wandelement bestimmten Abstand voneinander angebracht werden.

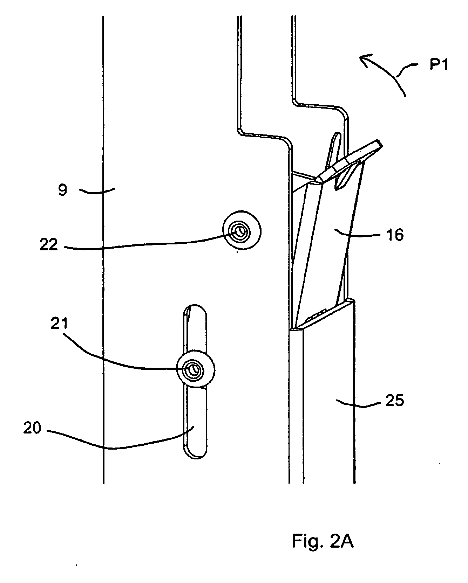

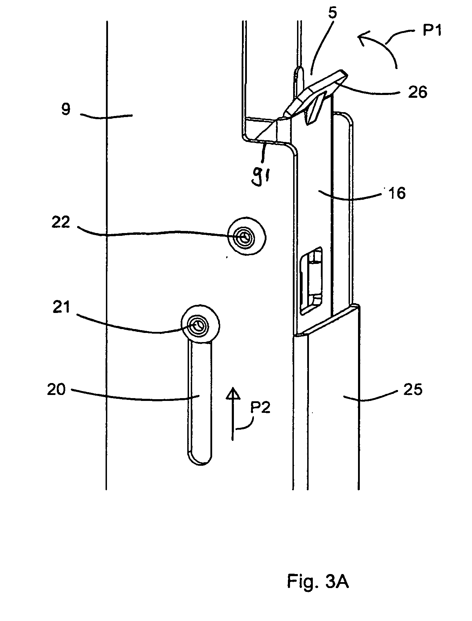

Nach dem Befestigen des Stützelements 8 am Bildschirm und dem Befestigen des Wandelements 2 an der Wand wird der Bildschirm von einem Nutzer ergriffen und die ersten hakenförmigen Elemente 13 werden durch den Nutzer um das erste Auffangelement 4 positioniert, wodurch der Bildschirm mit Hilfe der ersten hakenförmigen Elemente 13 am Rand 4 hängt. Dadurch, dass der Rand langgestreckt ist, können die ersten hakenförmigen Elemente 13 der beiden Stützen 9 über eine große Fläche mit dem Wandelement 2 verbunden werden. Ein genaues Ausrichten der hakenförmigen Elemente 13 bezüglich des Wandelements 2 ist daher nicht notwendig. Bevor die hakenförmigen Elemente 13 mit dem Rand 4 verbunden werden, wird jeder Schlitten 14 in die in Fig. 2A, 2B gezeigte Position gebracht, wodurch die Zugfeder 23 ausgezogen und unter Vorspannung gebracht wird. Die Gleitachse 22 befindet sich hierbei an einem Ende 24 der zweiten Aussparung 19 der L-förmigen Rille 17. Ferner befindet sich der Schlitten 14 in einer geschwenkten Position, wobei die Wand 16 vom Profil 11 zum Wandelement 2 hin geschwenkt ist. Das Wandelement 16 erstreckt sich hierbei vorbei an einer Wand 25 der Stütze 9. Nachdem die ersten hakenförmigen Elemente 13 in Eingriff mit dem Rand 4 gebracht worden sind, wird die Unterseite des Bildschirms und daher die Unterseiten der Stützen 9 in eine auf die Wand zu geschwenkte Richtung geschwenkt, wodurch ein Ende einer Fläche 26 des Wand elements 16 gegen die Wand anliegt. Das Ende der Fläche 26 bildet hierbei eine Anschlagfläche. Durch das weitere Schwenken des Bildschirms in Richtung auf die Wand wird der Schlitten 14 um die Schwenkachse 21 in die durch den Pfeil P1 angegebene Richtung geschwenkt, wobei die zweite Aussparung 19 der L-förmigen Rille 17 über die Gleitachse 22 verschoben wird, bis die Gleitachse 22 in der ersten Aussparung 18 liegt. Sobald sich die Gleitachse 22 in der ersten Aussparung 18 befindet, wird durch die Zugfeder 23 eine Kraft auf die Schwenkachse 21 und somit auf den Schlitten 14 ausgeübt, infolgedessen die Schwenkachse 21 in der durch den Pfeil P2 angezeigten Richtung in der Rille 20 verschoben wird und der mit der Schwenkachse 21 verbundene Schlitten 14 zum ersten hakenförmigen Element 13 verschoben wird (siehe Fig. 3A und 3B). Die Fläche 26, die sich durch das Schwenken des Bildschirms bereits an der Wand und somit an Rand 5 befindet, wird hierbei in Richtung des Rands 4 verschoben und in Eingriff mit der Fläche 7 des Rands 5 gebracht. Die Fläche 26 fungiert hierbei als zweites hakenförmiges Element. Die Stütze 9 ist nun fest am Wandelement 2 befestigt. Wenn die Stütze 9, beispielsweise durch Unbefugte in einer Richtung nach oben verschoben wird, wird diese Verschiebung durch Anschlagflächen 91 begrenzt, die sich in einer solch kurzen Entfernung zum ersten hakenförmigen Element 13 befinden, dass das Entfernen der Stütze 9 vom Wandelement 2 nicht möglich ist.

Wenn ein Nutzer den Bildschirm vom Wandelement 2 zu entfernen wünscht, übt der Nutzer auf eine mit jedem Schlitten 14 verbundene Zugstange 27 eine Kraft in der mit Pfeil P3 angezeigten Richtung aus, infolgedessen der Schlitten 14 in die in Fig. 2A, 2B gezeigte gelöste Position verschoben wird. Danach kann die Unterseite des Bildschirms des Wandelements 2 weggeschwenkt werden, wonach die ersten hakenförmigen Elemente 13 in eine Richtung nach oben verschoben werden können und der Eingriff mit Rand 4 aufgehoben wird.

## Patentansprüche

1. Vorrichtung (1), die sich zum Befestigen eines Bildschirms an einer Wand eignet, wobei die Vorrichtung (1) mit einem an der Wand zu befestigenden Wandelement (2) und einem an dem Bildschirm zu befestigenden Stützelement (8) versehen ist, wobei das Stützelement (8) mit einem ersten hakenförmigen Element (13) versehen ist, das im Betrieb an einem im Wandelement vorgesehenen ersten Auffangelement (4) befestigt werden kann, wobei das Stützelement (8) gegenüber das ersten hakenförmigen Element mit einem zweiten hakenförmigen Element versehen ist, das gegen einen Widerstand in eine Richtung auf das hakenförmige Element (13) verschoben werden kann, wobei das zweite hakenförmige Element sich in Betrieb gegen Widerstand im Eingriff mit dem im Wandelement vorgesehenen zweiten Auffangelement (5) befindet, **dadurch gekennzeichnet, dass** die Vorrichtung (1) mit einem Blockiermittel zum Blockieren des zweiten hakenförmigen Elements (26) in einer Blockierposition in einer vom Wandelement gelösten Position versehen ist und dass das zweite hakenförmige Element einen Schlitten (14) umfasst, der verschiebbar und schwenkbar bezüglich des Stützelements (8) gelagert ist, wobei der Schlitten (14) aus einer ersten, aus dem Wandelement (2) gelösten Position in eine zweite, mit dem zweiten Auffangelement (5) verbundene Position, und umgekehrt verschoben werden kann, wobei der Schlitten (14) in der ersten Position gegen Widerstand vom ersten hakenförmigen Element (13) beabstandet gelegen ist und zum Wandelement (2) geschwenkt ist, während der Schlitten (14) wegen des Schwenkens der Unterseite des Bildschirms und daher des Stützelements in eine auf die Wand zu geschwenkte richtung in der zweiten Position vom Wandelement (2) weg geschwenkt ist und zum ersten hakenförmigen Element (13) hin geschoben ist.

2. Vorrichtung (1) nach Anspruch 1, **dadurch gekennzeichnet, dass** der Schlitten (14) mit einer Schwenkachse (21) versehen ist, die in einer sich zum ersten hakenförmigen Element (13) erstreckenden Rille (20) im Stützelement (8) verschiebbar gelagert ist, wobei die Rille (20) ferner mit einer L-förmigen Rille (17) versehen ist, in der eine mit dem Stützelement (8) verbundene Gleitachse (22) liegt, welcher Schlitten (14) um die Schwenkachse (21) aus der ersten Position, in der die Gleitachse (22) im Bereich eines ersten Endes der L-förmigen Rille (17) liegt, in eine zweite Position, in der die Gleitachse (22) im Bereich eines zweiten Endes der L-förmigen Rille (17) liegt, geschwenkt werden kann und umgekehrt.

3. Vorrichtung (1) nach Anspruch 2, **dadurch gekennzeichnet, dass** die Gleitachse (22) näher am ersten hakenförmigen Element (13) liegt als die Schwenkachse (21), wobei sich zwischen der Schwenkachse (21) und der Gleitachse (22) eine Zugfeder (23) erstreckt.

4. Vorrichtung (1) nach einem der vorangegangenen Ansprüche, **dadurch gekennzeichnet, dass** der Schlitten (14) an einer von der Schwenkachse (21) abgewandten Seite mit einer Anschlagfläche versehen ist, wobei im Betrieb durch einen Kontakt zwischen der Anschlagfläche und dem Wandelement (2) und/oder der Wand der Schlitten (14) um die Schwenkachse (21) geschwenkt wird.

5. Vorrichtung (1) nach einem der vorangegangenen Ansprüche, **dadurch gekennzeichnet, dass** der Schlitten in die Blockierposition geschwenkt werden kann.

6. Vorrichtung (1) nach einem der vorangegangen Ansprüche, **dadurch gekennzeichnet, dass** das zweite hakenförmige Element mit einem Zugelement verbunden werden kann, um das zweite hakenförmige Element gegen Widerstand in eine vom ersten hakenförmigen Element abgewandte Richtung zu verschieben.

7. Vorrichtung (1) nach einem der vorangegangen Ansprüche, **dadurch gekennzeichnet, dass** das erste und/oder zweite Auffangelement einen langgestreckten Rand (4, 5) umfasst, mit dem das hakenförmige Element (13, 26) sich im Betrieb in Eingriff befindet, wobei die Länge des langgestreckten Rands (4, 5) mindestens doppelt so groß ist, wie die Breite des hakenförmigen Elements (13, 26).

8. Vorrichtung (1) nach einem der vorangegangenen Ansprüche, **dadurch gekennzeichnet, dass** das zweite Auffangelement einen langgestreckten Streifen (55) umfasst, der in dem Wandelement (2) verschiebbar gelagert ist, welcher Streifen (55) von einer Auffangposition, in der das zweite hakenförmige Element in Eingriff mit dem Streifen (55) zu bringen ist, in eine Freigabeposition, in der das zweite Auffangelement außer Eingriff mit dem Streifen ist, verschiebbar ist.

9. Vorrichtung (1) nach Anspruch 8, **dadurch gekennzeichnet, dass** der Streifen (55) mit dem Wandelement (2) verriegelt werden kann.

10. Stützelement (8) für Benutzung in einem Vorrichtung (1), die sich zum Befestigen eines Bildschirms an einer Wand eignet, wobei die Vorrichtung (1) mit einem an der Wand zu befestigenden Wandelement (2) und dem an dem Bildschirm zu befestigenden Stützelement (8) versehen ist, welches Stützelement (8) mit einem ersten hakenförmigen Element (13) versehen ist, das im Betrieb an einem in einem Wandelement vorgesehenen ersten Auffangelement (4) befestigt werden kann, wobei das Stützelement (8) gegenüber das erste hakenförmigen Element mit einem zweiten hakenförmigen Element (26) versehen ist, das gegen einen Widerstand in eine Richtung auf das ersten hakenförmige Element (13) verschoben werden kann, wobei das zweite hakenförmige Element sich in Betrieb gegen Widerstand im Eingriff mit dem im Wandelement vorgesehenen zweiten Auffangelement (5) befindet **dadurch gekennzeichnet, dass** das Stützelement (8) mit einem Blockiermittel zum Blockieren des zweiten hakenförmigen Elements (26) in einer Blockierposition in einer vom Wandelement gelösten Position versehen ist und dass das zweite hakenförmige Element einen Schlitten (14) umfasst, der verschiebbar und schwenkbar bezüglich des Stützelements (8) gelagert ist, wobei der Schlitten (14) aus einer ersten, aus dem Wandelement (2) gelösten Position in eine zweite, mit dem zweiten Auffangelement (5) verbundene Position, und umgekehrt verschoben werden kann, wobei der Schlitten (14) in der ersten Position gegen Widerstand vom ersten hakenförmigen Element (13) beabstandet gelegten ist und zum Wandelement (2) geschwenkt ist, während der Schlitten (14) wegen des Schwenkens der Unterseite des Bildschirms und daher des Stützelements in eine auf die Wand zu geschwenkte Richtung in der zweiten Position vom Wandelement (2) weg geschwenkt ist und zum ersten hakenförmigen Element (13) hin geschoben ist.

## Claims

1. Device (1) which is suitable for fastening a display screen to a wall, the device (1) being provided with a wall member (2) which is to be fastened to the wall and a support member (8) which is to be fastened to the display screen, the support member (8) being provided with a first hook-like member (13) which can be securely connected in operation to a first retainer element (4) which is provided as part of the wall member, the support member (8) being provided at a point opposite from the first hook-like member with a second hook-like member which can be displaced, against resistance, in a direction towards the hook-like member (13), the second hook-like member being situated in operation in engagement, against resistance, with the second retainer element (5) provided as part of the wall member, **characterised in that** the device (1) is provided with a locking means for locking the second hook-like member (26) in a locked position in which it is released from the wall member, and **in that** the second hook-like member comprises a slider (14) which is displaceably and pivotably mounted relative to the support member (8), the slider (14) being able to be displaced from a first position in which it is released from the wall member (2) to a second position in which it is connected to the second retainer element (5), and in the opposite direction, the slider (14) being situated at a distance from the first hook-like member (13), and being pivoted towards the wall member (2), against resistance, in the first position, whereas in the second position the slider (14) is pivoted away from the wall member (2) and is displaced towards the first hook-like member (13), because of the pivoting of the bottom end of the display screen, and hence of the support member, in a direction in which they are pivoted towards the wall.

2. Device (1) according to claim 1, **characterised in that** the slider (14) is provided with a pivot shaft (21) which is displaceably mounted in a slot (20) in the support member (8) extending towards the first hook-like member (13), the slot (20) also being provided with an L-shaped slot (17) in which a shaft for sliding (22) connected to the support member (8) is situated, which slider (14) can be pivoted about the pivot shaft (21) from the first position in which the shaft for sliding (22) is situated in the region of a first end of the L-shaped slot (17) to a second position in which the shaft for sliding (22) is situated in the region of a second end of the L-shaped slot (17), and in the opposite direction.

3. Device (1) according to claim 2, **characterised in that** the shaft for sliding (22) is situated closer to the first hook-like member (13) than the pivot shaft (21), a tension spring (23) extending between the pivot shaft (21) and the shaft for sliding (22).

4. Device (1) according to one of the preceding claims, **characterised in that** the slider (14) is provided with an abutment area at an end remote from the pivot shaft (21), the slider (14) being pivoted about the pivot shaft (21) in operation by contact between the abutment area and the wall member (2) and/or the wall.

5. Device (1) according to one of the preceding claims, **characterised in that** the slider can be pivoted to the locked position.

6. Device (1) according to one of the preceding claims, **characterised in that** the second hook-like member can be connected to a tension member to enable the second hook-like member to be displaced, against resistance, in a direction away from the first hook-like member.

7. Device (1) according to one of the preceding claims, **characterised in that** the first and/or second retainer element comprises an elongated edge (4, 5) with which the hook-like member (13, 26) is in engagement in operation, the length of the elongated edge (4, 5) being at least twice as great as the width of the hook-like member (13, 26)

8. Device (1) according to one of the preceding claims, **characterised in that** the second retainer element comprises an elongated strip (55) which is displaceably mounted in the wall member (2), which strip (55) can be moved from a retaining position in which the second hook-like member can be brought into engagement with the strip (55) to a releasing position in which the second retainer element is out of engagement with the strip.

9. Device (1) according to claim 8, **characterised in that** the strip (55) can be locked to the wall member (2).

10. Support member (8) for use in a device (1) which is suitable for fastening a display screen to a wall, the device (1) being provided with a wall member (2) which is to be fastened to the wall and the support member (8) which is to be fastened to the display screen, which support member (8) is provided with a first hook-like member (13) which can be securely connected in operation to a first retainer element (4) which is provided as part of a wall member, the support member(8) being provided at a point opposite from the first hook-like member with a second hook-like member (26) which can be displaced, against resistance, in a direction towards the first hook-like member (13), the second hook-like member being situated in operation in engagement, against resistance, with the second retainer element (5) provided as part of the wall member, **characterised in that** the support member (8) is provided with a locking means for locking the second hook-like member (26) in a locked position in which it is released from the wall member, and **in that** the second hook-like member comprises a slider (14) which is displaceably and pivotably mounted relative to the support member (8), the slider (14) being able to be displaced from a first position in which it is released from the wall member (2) to a second position in which it is connected to the second retainer element (5), and in the opposite direction, the slider (14) being situated at a distance from the first hook-like member (13), and being pivoted relative to the wall member (2), against resistance, in the first position, whereas in the second position the slider (14) is pivoted away from the wall member (2) and is displaced towards the first hook-like member (13), because of the pivoting of the bottom end of the display screen, and hence of the support member, in a direction in which they are pivoted towards the wall.

## Revendications

1. Appareil (1) destiné à fixer un écran à un mur, l'appareil (1) étant pourvu d'un élément mural (2) à fixer au mur et d'un élément de soutien (8) à fixer à l'écran, l'élément de soutien (8) étant pourvu d'un premier élément en forme de crochet (13) qui peut être fixé en fonctionnement à un premier élément récepteur (4) prévu dans l'élément mural, l'élément de soutien (8) étant pourvu par rapport au premier élément en forme de crochet, d'un second élément en forme de crochet qui peut être déplacé contre une résistance en direction de l'élément en forme de crochet (13), le second élément en forme de crochet se trouvant en engagement avec le second élément récepteur (5) prévu dans l'élément mural en fonctionnement contre une résistance, **caractérisé en ce que** l'appareil (1) est pourvu d'un moyen de blocage pour le blocage du second élément en forme de crochet (26) dans une position de blocage dans une position détachée de l'élément mural et **en ce que** le second élément en forme de crochet comporte un chariot (14) qui est logé de manière mobile et pivotante par rapport à l'élément de soutien (8), le chariot (14) pouvant être déplacé d'une première position détachée de l'élément mural (2) à une seconde position reliée au second élément récepteur (5) et inversement, le chariot (14) étant placé dans la première position contre une résistance à distance du premier élément en forme de crochet (13) et étant pivoté par rapport à l'élément mural (2), alors que le chariot (14) est pivoté à cause du pivotement du côté inférieur de l'écran et par conséquent de l'élément de soutien dans un sens pivoté vers le mur dans la seconde position loin de l'élément mural (2) et est poussé vers le premier élément en forme de crochet (13).

2. Appareil (1) selon la revendication 1, **caractérisé en ce que** le chariot (14) est pourvu d'un axe de pivotement (21) qui est logé de manière mobile dans une rainure (20) s'étendant vers le premier élément en forme de crochet (13) dans l'élément de soutien (8), la rainure (20) étant de plus pourvue d'une rainure en forme de L (17), dans laquelle un axe de coulissement (22) relié à l'élément de soutien (8) se trouve, lequel chariot (14) peut être pivoté autour de l'axe de pivotement (21) de la première position, dans laquelle l'axe de coulissement (22) se trouve dans la zone d'une première extrémité de la rainure en forme de L (17), à une seconde position, dans laquelle l'axe de coulissement (22) se trouve dans la zone d'une seconde extrémité de la rainure en forme de L (17) et inversement.

3. Appareil (1) selon la revendication 2, **caractérisé en ce que** l'axe de coulissement (22) se trouve plus près du premier élément en forme de crochet (13) que l'axe de pivotement (21), un ressort de traction (23) s'étendant entre l'axe de pivotement (21) et l'axe de coulissement (22).

4. Appareil (1) selon l'une quelconque des revendications précédentes, **caractérisé en ce que** le chariot (14) est pourvu, sur un côté éloigné de l'axe de pivotement (21), d'une surface de butée, le chariot (14) étant pivoté autour de l'axe de pivotement (21) en fonctionnement par un contact entre la surface de butée et l'élément mural (2) et/ou le mur.

5. Appareil (1) selon l'une quelconque des revendications précédentes, **caractérisé en ce que** le chariot peut être pivoté dans la position de blocage.

6. Appareil (1) selon l'une quelconque des revendications précédentes, **caractérisé en ce que** le second élément en forme de crochet peut être relié à un élément de traction afin de déplacer le second élément en forme de crochet contre la résistance dans une direction éloignée du premier élément en forme de crochet.

7. Appareil (1) selon l'une quelconque des revendications précédentes, **caractérisé en ce que** le premier et/ou le second élément récepteur comporte un bord étiré en longueur (4, 5), avec lequel l'élément en forme de crochet (13, 26) se trouve en engagement en fonctionnement, la longueur du bord étiré en longueur (4, 5) étant au moins deux fois plus grande que la largeur de l'élément en forme de crochet (13, 26).

8. Appareil (1) selon l'une quelconque des revendications précédentes, **caractérisé en ce que** le second élément récepteur comporte une bande (55) étirée en longueur qui est logée de manière mobile dans l'élément mural (2), laquelle bande (55) peut être déplacée d'une position de réception, dans laquelle le second élément en forme de crochet est à amener en engagement avec la bande (55), à une position de libération, dans laquelle le second élément récepteur est désengagé de la bande.

9. Appareil (1) selon la revendication 8, **caractérisé en ce que** la bande (55) peut être verrouillée à l'élément mural (2).

10. Elément de soutien (8) destiné à être utilisé dans un appareil (1) qui convient à la fixation d'un écran à un mur, l'appareil (1) étant pourvu d'un élément mural (2) à fixer au mur et de l'élément de soutien (8) à fixer à l'écran, lequel élément de soutien (8) est pourvu d'un premier élément en forme de crochet (13) qui peut être fixé en fonctionnement à un premier élément récepteur (4) prévu dans un élément mural, l'élément de soutien (8) étant pourvu, par rapport au premier élément en forme de crochet, d'un second élément en forme de crochet (26) qui peut être déplacé contre une résistance en direction du premier élément en forme de crochet (13), le second élément en forme de crochet se trouvant en engagement avec le second élément récepteur (5) prévu dans l'élément mural en fonctionnement contre une résistance, **caractérisé en ce que** l'élément de soutien (8) est pourvu d'un moyen de blocage pour le blocage du second élément en forme de crochet (26) dans une position de blocage dans une position détachée de l'élément mural et **en ce que** le second élément en forme de crochet comporte un chariot (14) qui est logé de manière mobile et pivotante par rapport à l'élément de soutien (8), le chariot (14) pouvant être déplacé d'une première position détachée de l'élément mural (2) à une seconde position reliée au second élément récepteur (5) et inversement, le chariot (14) étant placé dans la première position contre une résistance à distance du premier élément en forme de crochet (13) et étant pivoté par rapport à l'élément mural (2), alors que le chariot (14) est pivoté à cause du pivotement du côté inférieur de l'écran et par conséquent de l'élément de soutien dans une direction pivotée vers le mur à la seconde position loin de l'élément mural (2) et est poussé vers le premier élément en forme de crochet (13).
